(19) **Europäisches Patentamt**
**European Patent Office**
**Office européen des brevets**

(11) **EP 1 434 071 B1**

(12) **FASCICULE DE BREVET EUROPEEN**

(45) Date de publication et mention
de la délivrance du brevet:
**26.09.2007 Bulletin 2007/39**

(51) Int Cl.:
***G02B 6/036*** *(2006.01)*

(21) Numéro de dépôt: **03293230.3**

(22) Date de dépôt: **19.12.2003**

(54) **Fibre optique à compensation de dispersion chromatique dans la bande S**

Optische Faser zur Kompensierung der chromatischen Dispersion im S-Band

Chromatic dispersion compensating optical fibre in the S-band

(84) Etats contractants désignés:
**AT BE BG CH CY CZ DE DK EE ES FI FR GB GR HU IE IT LI LU MC NL PT RO SE SI SK TR**

(30) Priorité: **24.12.2002 FR 0216616**

(43) Date de publication de la demande:
**30.06.2004 Bulletin 2004/27**

(73) Titulaire: **Draka Comteq B.V.**
**1083 HJ Amsterdam (NL)**

(72) Inventeurs:
• **De Montmorillon, Louis-Anne**
**75017 Paris (FR)**
• **Fleury, Ludovic**
**78390 Bois d'Arcy (FR)**
• **Sillard, Pierre**
**78150 Le Chesnay (FR)**

• **Beaumont, Florent**
**78700 Conflans sainte Honorine (FR)**
• **Gorlier, Maxime**
**75008 Paris (FR)**
• **Molin, Denis**
**78150 Le Chesnay (FR)**
• **Nouchi, Pascale**
**78600 Maisons-Lafitte (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 1 111 414          EP-A- 1 219 986**
**EP-A- 1 241 810          WO-A- 02/19576**
**US-A1- 2001 010 746      US-A1- 2002 067 903**

**Description**

L'invention concerne le domaine des fibres optiques pour réseau de transmission à multiplexage en longueur d'onde.

L'augmentation des débits d'information sur ce type de réseau impose une compensation de la dispersion chromatique et de la pente de dispersion sur d'autres bandes spectrales que la bonde C. La bande dite S correspond à une bande spectrale allant approximativement de 1460nm à 1530nm. La bande dite C correspond à une bande spectrale allant approximativement de 1530nm à 1565nm. La bande dite L correspond à une bande spectrale allant approximativement de 1565nm à 1625nm. La bande dite U correspond à une bande spectrale allant approximativement de 1625nm à 1675nm. La bande spectrale la plus couramment utilisée est la bande C. L'invention s'intéresse aux fibres de compensation de la dispersion chromatique dans la bande S.

Dons l'art antérieur, il est connu d'associer certains types de fibres optiques à dispersion décalée réduisant les effets non-linéaires croisés (« non-zero dispersion shifted fiber » en terminologie anglo-saxonne correspondant à l'abréviation NZ-DSF) à des fibres de compensation de dispersion (« dispersion compensating fiber » en terminologie anglo-saxonne correspondant à l'abréviation DCF), ce qui permet d'obtenir une ligne de transmission dont la dispersion est nulle sur une large plage spectrale.

Selon un premier art antérieur par exemple décrit dans la demande de brevet EP 1219986, il est connu d'utiliser une fibre optique à compensation de dispersion chromatique en bande S, mais les exemples à 2 ou 3 tranches présentés, soit ont un rapport entre l'atténuation à 1520nm et celle à 1500nm supérieur à un facteur 2, soit ont un rapport entre dispersion chromatique et pente de dispersion chromatique qui les rend inadaptées pour l'objet de l'invention.

La demande de brevet WO 02/19576 décrit une fibre optique à compensation de dispersion chromatique dans la bande S de 1460 nm à 1530 nm, pour réseau de transmission à multiplexage en longueur d'onde, présentant une dispersion chromatique négative à la longueur d'onde de 1495 nm, comportant successivement du centre vers la périphérie un coeur présentant un profil d'indice variable puis une gaine d'indice constant. Le profil d'indice variable du coeur comporte successivement, du centre vers la périphérie, une tranche centrale d'indice maximum supérieur à l'indice de la gaine, une première tranche enterrée d'indice minimum inférieur à l'indice de la gaine, une tranche annulaire d'indice maximum supérieur à l'indice de la gaine et inférieur à l'indice maximum de la tranche centrale, une deuxième tranche enterrée d'indice minimum inférieur à l'indice de la gaine.

La fibre optique comporte une tranche centrale présentant une différence entre l'indice maximum supérieur à l'indice de la gaine et l'indice de la gaine étant comprise entre 8.10$^{-3}$ et 14.10$^{-3}$, préférablement entre 9.10$^{-3}$ et 12.10$^{-3}$, et une première tranche enterrée présentant une différence entre l'indice minimum inférieur à l'indice de la gaine et l'indice de la gaine étant comprise entre -3.10$^{-3}$ et -0,5.10$^{-3}$, préférablement entre -2,5.10$^{-3}$ et -1,0.10$^{-3}$

Ces fibres optiques à compensation de dispersion chromatique sont appliquées dans le domaine de transmission à multiplexage en longueur d'onde avec amplification des signaux optiques par effet Raman.

L'invention propose une fibre optique à compensation de dispersion chromatique qui, grâce à des profils à quatre tranches présentant des structures correspondant à des plages particulières d'indice et de rayon, permet une compensation efficace en bande S de la dispersion chromatique d'une certaine gamme de fibres optiques de ligne, tout en conservant des atténuations à 1500nm et à 1520nm qui soient comparables.

Selon l'invention, il est prévu μm une fibre optique à compensation de dispersion chromatique dans la bande S de 1460 nm à 1530 nm, pour réseau de transmission à multiplexage en longueur d'onde, présentant une dispersion chromatique négative à la longueur d'onde de 1495 nm, comportant successivement du centre vers la périphérie un coeur présentant un profil d'indice variable puis une gaine d'indice constant, le profil d'indice variable du coeur comportant successivement, du centre vers la périphérie, une tranche centrale d'indice maximum supérieur à l'indice de la gaine, une première tranche enterrée d'indice minimum inférieur à l'indice de la gaine, une tranche annulaire d'indice maximum supérieur à l'indice de la gaine et inférieur à l'indice maximum de la tranche centrale, une deuxième tranche enterrée d'indice minimum inférieur à l'indice de la gaine, la différence ($\Delta n_1$) entre l'indice maximum de la tranche centrale et l'indice de la gaine étant comprise entre 12.10$^{-3}$ et 20.10$^{-3}$, le rayon ($r_1$) de la partie de la tranche centrale présentant un indice supérieur à l'indice de la gaine étant compris entre 1,57 μm et 2,5 μm, le rayon extérieur ($r_2$) de la première tranche enterrée présentant un indice inférieur à l'indice de la gaine étant compris entre 4,0 μm et 7,4 μm, les rayons et les indices de chacune des tranches étant déterminés de manière à ce que la fibre optique à compensation de dispersion présente, à la longueur d'onde de 1495 nm, un rapport dispesion chromatique sur pente de dispersion chromatique dont la valeur absolue est comprise entre 68 nm et 158 nm, caractérisée en ce que la difference ($\Delta n_2$) entre l'indice minimum de la première tranche enterrée et l'indice de la gaine est comprise entre -12.10$^{-3}$ et -5.10$^{-3}$, et en ce que la valeur de l'intégrale $\left( S_{01} = \int_{0}^{r1} \Delta n(r).dr \right)$ entre un rayon nul

et le rayon ($r_1$) de la partie de la tranche centrale présentant un indice supérieur à l'indice de la gaine, de la différence d'indice par rapport à la gaine, est comprise entre 28,4.10$^{-3}$ μm et 35,5.10$^{-3}$.

Un aspect particulièrement important est le caractère très enterré de l'indice de la première tranche enterrée par rapport à l'indice de la tranche centrale. La profondeur d'enterrement de cette tranche très enterrée par rapport à la hauteur de la tranche centrale est une caractéristique avantageuse importante qui permet d'obtenir plus aisément une bonne compensation en bande S. aussi bien de la dispersion chromatique que de la pente de dispersion chromatique sans dégrader notablement les autres propriétés de la fibre optique à compensation de dispersion chromatique. De préférence, la valeur absolue de l'indice de la tranche enterrée est inférieure ou égale à 90% de la valeur absolue de l'indice maximum de la tranche centrale.

La tranche centrale est de préférence en forme de rectangle, mais elle peut aussi être en forme de trapèze ou de triangle ou en alpha. Les autres tranches sont de préférence en forme de rectangle, mais elles peuvent aussi être par exemple en forme de trapèze ou de triangle ou en alpha.

De préférence, les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 80nm et 118nm. Avantageusement, les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 87nm et 105nm.

La fibre optique à compensation de dispersion selon l'invention est associée à une fibre optique de ligne dans un système de transmission à fibre optique. Dans une forme de réalisation, le système de transmission à fibre optique comprend l'association d'une fibre optique de ligne et d'une fibre optique à compensation de dispersion selon l'invention en ligne. Dans une autre forme de réalisation, le système de transmission à fibre optique comprend l'association d'une fibre optique de ligne et d'une fibre optique à compensation de dispersion selon l'invention en module.

Afin d'améliorer la qualité de la compensation de la dispersion chromatique dans la bande S de la fibre optique de ligne ainsi que les outres propriétés de la fibre optique à compensation de dispersion chromatique selon l'invention, un certain nombre des plages ou de relations préférentielles notamment pour les indices et les rayons du type de profil d'indice du coeur à quatre tranches vont maintenant être données.

De préférence, la valeur du double de l'intégrale

$$\left(T_{01} = 2. \int_0^{r1} \Delta n(r) r . dr\right),$$ entre un rayon nul et le rayon

$(r_1)$ de la partie de la tranche centrale présentant un indice supérieur à l'indice de la gaine, du produit de la différence d'indice par rapport à la gaine par le rayon, est comprise entre $49.10^{-3}$ $\mu m^2$ et $81.10^{-3}$ $\mu m^2$.

De préférence, la valeur de l'intégrale

$$\left(S_{12} = \int_{r1}^{r2} \Delta n(r) dr\right),$$ entre le rayon $(r_1)$ de la partie de la tranche centrale présentant un indice supérieur à l'indice de la gaine et le rayon $(r_2)$ de la partie de la première tranche enterrée présentant un indice inférieur à l'indice de la gaine, de la différence d'indice par rapport à la gaine, est comprise entre $-56.10^{-3}$ et $-20.10^{-3}$ $\mu m$.

De préférence, la valeur du double de l'intégrale

$$\left(T_{12} = 2. \int_{r1}^{r2} \Delta n(r) r . dr\right),$$ entre le rayon $(r_1)$ de la partie

de la tranche centrale présentant un indice supérieur à l'indice de la gaine et le rayon $(r_2)$ de la partie de la première tranche enterrée présentant un indice inférieur à l'indice de la gaine, du produit du rayon par la différence d'indice par rapport à la gaine, est comprise entre $-470.10^{-3}$ et $-130.10^{-3}$ $\mu m^2$.

De préférence, la différence $(\Delta n_3)$ entre l'indice maximum de la tranche annulaire et l'indice de la gaine est comprise entre $1,0.10^{-3}$ et $8,0.10^{-3}$, et le rayon extérieur $(r_3)$ de la tranche annulaire est compris entre $6,8\mu m$ et $12\mu m$.

De préférence, la valeur de l'intégrale

$$\left(S_{23} = \int_{r2}^{r3} \Delta n(r) dr\right),$$ entre le rayon $(r_2)$ de la partie de la première tranche enterrée présentant un indice inférieur à l'indice de la gaine et le rayon $(r_3)$ de la partie de la tranche annulaire présentant un indice supérieur à l'indice de la gaine, de la différence d'indice par rapport à la gaine, est comprise entre $5.10^{-3}$ et $26.10^{-3}$ $\mu m$.

De préférence, la valeur du double de l'intégrale

$$\left(T_{23} = 2. \int_{r2}^{r3} \Delta n(r) r . dr\right),$$ entre le rayon $(r_2)$ de la partie

de la première tranche enterrée présentant un indice inférieur à l'indice de la gaine et le rayon $(r_3)$ de la partie de la tranche annulaire présentant un indice supérieur à l'indice de la gaine, du produit du rayon par la différence d'indice par rapport à la gaine, est comprise entre $60.10^{-3}$ et $440.10^{-3}$ $\mu m^2$.

De préférence, la différence $(\Delta n_4)$ entre l'indice minimum de la deuxième tranche enterrée et l'indice de la gaine est comprise entre $-12.10^{-3}$ et 0, et le rayon extérieur $(r_4)$ de la deuxième tranche enterrée est compris entre $9\mu m$ et $21\mu m$.

De préférence, la valeur de l'intégrale

$$\left(S_{34} = \int_{r3}^{r4} \Delta n(r) dr\right),$$ entre le rayon $(r_3)$ de la partie de la tranche annulaire présentant un indice supérieur à l'indice de la gaine et le rayon ($r_4$) de la partie de la deuxième tranche enterrée présentant un indice inférieur à l'indice de la gaine, de la différence d'indice par rapport à la gaine, est comprise entre -153.10⁻³ et 0 μm.

De préférence, la valeur de l'intégrale

$$\left(S_{04} = \int_0^{r_4} \Delta n(r).dr\right),$$ entre un rayon nul et le rayon ($r_4$)

de la partie de la deuxième tranche enterrée présentant un indice inférieur à l'indice de la gaine, de la différence d'indice par rapport à la gaine, est comprise entre -138.10⁻³ et 22 μm.

De préférence, la valeur du double de l'intégrale

$$\left(T_{04} = 2.\int_0^{r_4} \Delta n(r).r.dr\right),$$ entre un rayon nul et le rayon

($r_4$) de la partie de la deuxième tranche enterrée présentant un indice inférieur à l'indice de la gaine, du produit du rayon par la différence d'indice par rapport à la gaine, est inférieure ou égale à 80.10⁻³ μm².

De préférence, la valeur du double de l'intégrale

$$\left(U_{04} = 2.\int_0^{r_4} \Delta n(r).\exp\left(\frac{-r^2}{b^2}\right).r.dr\right),$$ entre un rayon nul

et le rayon ($r_4$) de la partie de la deuxième tranche enterrée présentant un indice inférieur à l'indice de la gaine, du produit du rayon par la différence d'indice par rapport à la gaine par la fonction exp(-$r^2/b^2$), avec b = 1,54μm, est comprise entre 24,1.10⁻³ et 28,3.10⁻³ μm².

De préférence, la valeur du double de l'intégrale

$$\left(U_{24} = 2.\int_{r_2}^{r_4} \Delta n(r).\exp\left(\frac{-r^2}{c^2}\right).r.dr\right),$$ entre le rayon

($r_2$) de la partie de la première tranche enterrée présentant un indice supérieur à l'indice de la gaine et le rayon ($r_4$) de la partie de la deuxième tranche enterrée présentant un indice inférieur à l'indice de la gaine, du produit du rayon par la différence d'indice par rapport à la gaine par la fonction exp(-$r^2/c^2$), avec c = 4,67μm, est comprise entre 9,8.10⁻³ et 42,6.10⁻³ μm².

L'invention sera mieux comprise et d'autres particularités et avantages apparaîtront à l'aide de la description ci-après et des dessins joints, donnés à titre d'exemples, où :

- la figure 1 représente schématiquement un exemple de type de profil à quatre tranches d'une fibre optique à compensation de dispersion chromatique selon l'invention ;
- la figure 2 représente un tableau comprenant les valeurs de rayons et de différences d'indice pour une dizaine d'exemples de profils à quatre tranches d'une fibre optique à compensation de dispersion chromatique selon l'invention ;
- la figure 3 représente un tableau comprenant certaines caractéristiques des profils de fibre optique à compensation de dispersion chromatique selon l'invention définis à la figure 2;
- la figure 4 représente un tableau comprenant d'autres caractéristiques des profils de fibre optique à compensation de dispersion chromatique selon l'invention définis à la figure 2.

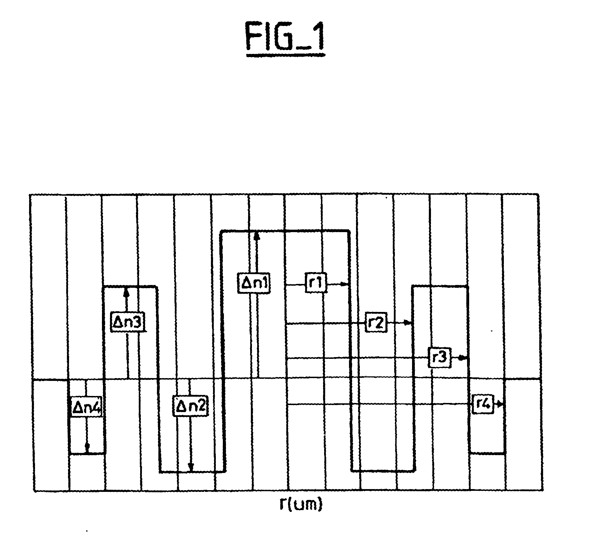

La figure 1 représente schématiquement un exemple de type de profil à quatre tranches d'une fibre optique à compensation de dispersion chromatique selon l'invention. La première tranche appelée tranche centrale présente une différence maximale d'indice Δn1 avec l'indice constant de la gaine et un rayon extérieur r1. La différence d'indice maximale Δn1 est positive. De préférence, entre un rayon nul et le rayon r1, l'indice est constant. La deuxième tranche appelée première tranche enterrée présente une différence maximale d'indice Δn2 avec l'indice constant de la gaine et un rayon extérieur r2. La différence d'indice maximale Δn2 est négative. De préférence, entre le rayon r1 et le rayon r2, l'indice est constant. La troisième tranche appelée tranche annulaire présente une différence maximale d'indice Δn3 avec l'indice constant de la gaine et un rayon extérieur r3. La différence d'indice maximale Δn3 est positive. De préférence, entre le rayon r2 et le rayon r3, l'indice est constant. La quatrième tranche appelée deuxième tranche enterrée présente une différence maximale d'indice Δn4 avec l'indice constant de la gaine et un rayon extérieur r4. La différence d'indice maximale Δn4 est négative. De préférence, entre le rayon r3 et le rayon r4, l'indice est constant. Au-delà du rayon r4 se trouve la gaine d'indice constant.

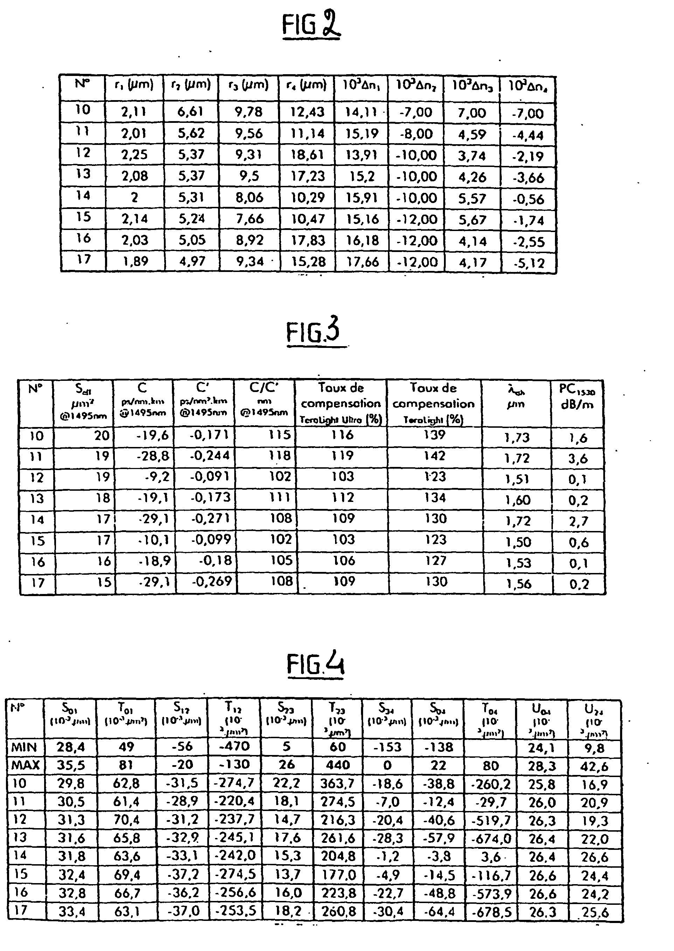

La figure 2 représente un tableau comprenant les valeurs de rayons et de différences d'indice pour une dizaine d'exemples de profils à quatre tranches d'une fibre optique à compensation de dispersion chromatique selon l'invention. La colonne de gauche comprend la dénomination des exemples du n°10 au n°17. Les trois colonnes suivantes expriment en μm des rayons du profil d'indice variable de coeur. Les trois dernières colonnes expriment mille fois des différences d'indice (sans unité).

La figure 3 représente un tableau comprenant certaines caractéristiques des profils de fibre optique à compensation de dispersion chromatique selon l'invention définis à la figure 2. La colonne de gauche comprend la dénomination des exemples du n°10 au n° 17. Pour chaque exemple considéré, les autres colonnes représentent des caractéristiques de la fibre optique correspondant à l'exemple considéré. La colonne suivante représente la surface effective $S_{eff}$ exprimée en μm² à la longueur d'onde de 1495nm. La colonne suivante représente la dispersion chromatique C exprimée en ps/nm.km à une longueur d'onde volant 1495nm. La colonne suivante représente la pente de dispersion chromatique C' exprimée en ps/nm².km à une longueur d'onde volant 1495nm. La colonne suivante représente le rapport dispersion chromatique C sur pente de dispersion chromatique C' exprimée en nm à une longueur d'onde valant 1495nm. La colonne suivante représente le taux de compensation exprimée en %, pour la fibre optique de ligne vendue sous la marque « TERALIGHT ULTRA ». La colonne suivante représente le taux de compensation exprimée en %, pour la fibre optique de ligne vendue sous la marque « TERALIGHT ». La colonne suivante représente la longueur de coupure théorique $\lambda_{cth}$ exprimée en nm. La dernière colonne représente des pertes par courbure exprimées en dB/m à la longueur d'onde de 1530nm, pour un enroulement autour d'un rayon de 10mm.

La figure 4 représente un tableau comprenant d'autres caractéristiques des profils de fibre optique à compensation de dispersion chromatique selon l'invention définis à la figure 2. La colonne de gauche comprend la dénomination des exemples du n°10 au n° 17. Pour chaque exemple considéré, les autres colonnes représentent des caractéristiques de la fibre optique correspondant à l'exemple considéré. La colonne de gauche comprend également des dénominations MIN et MAX correspondant dans les colonnes suivantes respectivement à un minimum et à un maximum préférentiel pour la valeur de la caractéristique considérée. Pour chaque colonne, la première ligne comprenant une valeur numérique correspond à une valeur minimale préférentielle, la deuxième ligne comprenant une valeur numérique correspondant à une valeur maximale préférentielle, et les lignes suivantes comprenant des valeurs numériques correspondant aux valeurs réelles pour les exemples n°10 à n°17. La colonne suivante représente la valeur de $S_{01}$ exprimées en millièmes de $\mu$m. La colonne suivante représente la valeur de $T_{01}$ exprimées en millièmes de $\mu$m$^2$. La colonne suivante représente la valeur de $S_{12}$ exprimées en millièmes de $\mu$m. La colonne suivante représente la valeur de $T_{12}$ exprimées en millièmes de $\mu$m$^2$. La colonne suivante représente la valeur de $S_{23}$, exprimées en millièmes de $\mu$m. La colonne suivante représente la valeur de $T_{23}$ exprimées en millièmes de $\mu$m$^2$. La colonne suivante représente la valeur de $S_{03}$ exprimées en millièmes de $\mu$m. La colonne suivante représente la voleur de $T_{03}$ exprimées en millièmes de $\mu$m$^2$. La dernière colonne représente la valeur de $U_{03}$ exprimées en millièmes de $\mu$m$^2$.

**Revendications**

1. Fibre optique à compensation de dispersion chromatique dans la bande S de 1460 nm à 1530 nm, pour réseau de transmission à multiplexage en longueur d'onde,
présentant une dispersion chromatique négative à la longueur d'onde de 1495 nm,
comportant successivement du centre vers la périphérie un coeur présentant un profil d'indice variable puis une gaine d'indice constant,
le profil d'indice variable du coeur comportant succesivement, du centre vers la périphérie,
une tranche centrale d'indice maximum supérieur à l'indice de la gaine,
une première tranche enterrée d'indice minimum inférieur à l'indice de la gaine,
une tranche annulaire d'indice maximum supérieur à l'indice de la gaine et inférieur à l'indice maximum de la tranche centrale,
une deuxième tranche enterrée d'indice minimum inférieur à l'indice de la gaine,
la différence ($\Delta n_1$) entre l'indice maximum de la tranche centrale et l'indice de la gaine étant comprise entre $12.10^{-3}$ et $20.10^{-3}$,
le rayon ($r_1$) de la partie de la tranche centrale présentant un indice supérieur à l'indice de la gaine étant compris entre $1,57\ \mu$m et $2,5\ \mu$m,
le rayon extérieur ($r_2$) de la première tranche enterrée présentant un indice inférieur à l'indice de la gaine étant compris entre $4,0\ \mu$m et $7,4\ \mu$m, et
les rayons et les indices de chacune des tranches étant déterminés de manière à ce que la fibre optique à compensation de dispersion présente, à la longueur d'onde de 1495 nm, un rapport dispersion chromatique sur pente de dispersion chromatique dont la valeur absolue est comprise entre 68 nm et 158 nm.
**caractérisée en ce que** la différence ($\Delta n_2$) entre l'indice minimum de la première tranche enterrée et l'indice de la gaine est comprise entre $-12.10^{-3}$ et $-5.10^{-3}$,
**en ce que** la valeur de l'intégrale

$$\left(S_{01} = \int_0^{r1} \Delta n(r).dr\right)$$ entre un rayon nul et le

rayon ($r_1$) de la partie de la tranche centrale présentant un indice supérieur à l'indice de la gaine, de la différence d'indice par rapport à la gaine, est comprise entre $28,4.10^{-3}\ \mu$m et $35,5.10^{-3}\ \mu$m.

2. Fibre optique à compensation de dispersion chromatiqe dans la bande S, selon la revendication 1, présentant la valeur du double de l'intégrale

$$\left(T_{01} = 2.\int_0^{r1} \Delta n(r).r.dr\right)$$ entre un rayon nul et le rayon ($r_1$) de la partie de la tranche centrale présentant un indice supérieur à l'indice de la gaine, du produit de l'indice par rapport à la gaine par le rayon, étant comprise entre $49.10^{-3}\ \mu$m$^2$ et $81.10^{-3}\ \mu$m$^2$.

3. Fibre optique à compensation de dispersion chromatique dans la bande S, selon la revendication 1 ou 2, présentant la valeur de l'intégrale

$$\left(S_{12} = \int_{r1}^{r2} \Delta n(r).dr\right)$$ entre le rayon $(r_1)$ de

la partie de la tranche centrale présentant un indice supérieur à l'indice de la gaine et le rayon $(r_2)$ de la partie de la tranche enterrée présentant un indice inférieur à l'indice de la gaine, de la différence d'indice par rapport à la gaine, étant comprise entre $-56 \cdot 10^{-3}$ μm et $-20.10^{-3}$ μm.

4. Fibre optique à compensation de dispersion chromatique dans la bande S, selon la revendication 1, 2 ou 3, présentant la valeur du double de l'intégrale

$$\left(T_{12} = 2.\int_{r1}^{r2} \Delta n(r).r.dr\right)$$ entre le rayon

$(r_1)$ de la partie de la tranche centrale présentant un indice supérieur à l'indice de la gaine et le rayon $(r_2)$ de la partie de la première tranche enterrée présentant un indice inférieur à l'indice de la gaine, du produit du rayon par la différence d'indice par rapport à la gaine, est comprise entre $-470.10^{-3}$ μm$^2$ et $-130 \cdot 10^{-3}$ μm$^2$.

5. Fibre optique à compensation de dispersion chromatique dans la bande S, selon l'une quelconques des revendications 1 à 4, présentant la différence $(\Delta n_3)$ entre l'indice de la tranche annulaire et l'indice da la gaine étant comprise entre $1,0.10^{-3}$ et $8,0 \cdot 10^{-3}$, et le rayon extérieur $(r_3)$ de la tranche annulaire étant compris entre 6,8 μm et 12 μm.

6. Fibre optique à compensation de dispersion chromatique dans la bande S, selon la revendication 5, présentant la valeur de l'intégrale

$$\left(S_{23} = \int_{r2}^{r3} \Delta n(r).dr\right)$$ entre le rayon $(r_2)$ de

la partie de la première tranche enterrée présentant un indice inférieur à l'indice de la gaine et le rayon $(r_3)$ de la partie de la tranche annulaire présentant un indice supérieur à l'indice de la gaine, de la différence d'indice par rapport à la gaine, étant comprise entre $5.10^{-3}$ μm et $26.10^{-3}$ μm.

7. Fibre optique à compensation de dispersion chromatique dans la bande S, selon la revendication 5 ou 6, présentant la valeur du double de l'intégrale

$$\left(T_{23} = 2.\int_{r2}^{r3} \Delta n(r).r.dr\right)$$ entre le rayon

$(r_2)$ de la partie de la première tranche enterrée présentant un indice inférieur à l'indice de la gaine et le rayon $(r_3)$ de la partie da la tranche annulaire présentant un indice supérieur à l'indice de la gaine, du produit du rayon par la différence d'indice par rapport à la gaine, étant comprise entre $60.10^{-3}$ μm$^2$ et $440.10^{-3}$ μm$^2$.

8. Fibre optique à compensation de dispersion chromatique dans la bande S, selon l'une quelconque des revendications 1 à 7, présentant la différence $(\Delta n_4)$ entre l'indice minimum de la deuxième tranche enterrée et l'indice de la gaine étant comprise entre $-12.10^{-3}$ et 0, et le rayon extérieur $(r_4)$ de la deuxième tranche enterrée étant compris entre 9 μm et 21 μm.

9. Fibre optique à compensation de dispersion chromatique dans la bande S, selon la revendications 8, présentant la valeur de l'intégrale

$$\left(S_{34} = \int_{r3}^{r4} \Delta n(r).dr\right)$$ entre le rayon $(r_3)$ de

la partie de la tranche annulaire présentant un indice supérieur à l'indice de la gaine et le rayon $(r_4)$ de la partie de la deuxième tranche enterrée présentant un indice inférieur à l'indice de la gaine, de la différence d'indice par rapport à la gaine, étant comprise entre $-153.10^{-3}$ μm et 0 μm.

10. Fibre optique à compensation de dispersion chromatique dans la bande S, selon la revendication 8 ou 9, présentant la valeur de l'intégrale

$$\left(S_{04} = \int_{0}^{r4} \Delta n(r).dr\right)$$ entre un rayon nul et le rayon (r4) de la partie de la deuxième tranche enterrée présentant un indice inférieur à l'indice de la gaine, de la différence d'indice par rapport à la gaine, étant comprise entre $-138.10^{-3}$ μm et $22.10^{-3}$ μm.

11. Fibre optique à compenstion de dispersion chromatique dans la bande S, selon l'une quelconque des revendications 8 à 10, présentant la valeur double de l'intégrale $\left(T_{04} = 2.\int_{0}^{r4} \Delta n(r).r.dr\right)$ entre un rayon nul et le rayon $(r_4)$ de la partie de la deuxième tranche enterrée présentant un indice inférieur à l'indice de la gaine, du produit du rayon par la différence d'indice par rapport à la gaine, étant inférieur ou égale à $80.10^{-3}$ μm$^2$.

12. Fibre optique à compensation de dispersion chromatique dans la bande S, selon l'une quelconque des revendications 8 à 11, présentant la valeur du double de l'intégrale

$$U_{04} = 2 \cdot \int_0^{r4} \Delta n(r) \cdot \exp\left(\frac{-r^2}{b^2}\right) \cdot r \cdot dr$$

entre un rayon nul et le rayon (r$_4$) de la partie de la deuxième tranche enterrée présentant un indice inférieur à l'indice de la gainee, du produit du rayon par la différence d'indice par rapport à la gaine par la fonction exp(-r$^2$/b$^2$), avec b = 1,54 µm, étant comprise entre 24.10$^{-3}$ µm$^2$ et 28,3 10$^{-3}$ µm$^2$.

13. Fibre optique à compensation de dispersion chromatique dans la bande S, selon l'une quelconque des revendications 8 à 12, présentant la valeur du double de l'intégrale

$$U_{24} = 2 \cdot \int_{r2}^{r4} \Delta n(r) \cdot \exp\left(\frac{-r^2}{c^2}\right) \cdot r \cdot dr$$

entre le rayon (r$_2$) de la partie de la première tranche enterrée présentant un indice supérieur à l'indice de la gaine et le rayon (r$_4$) de la partie de la deuxième tranche enterrée présentant un indice inférieur à l'indice de la gaine, du produit du rayon par la différence d'indice par rapport à la gaine par la fonction exp(-r$^2$/c$^2$), avec c = 4,67µm, est comprise entre 9,8.10$^{-3}$ et 42,6.10$^{-3}$ µm$^2$.

14. Fibre optique à compensation de dispersion chromatique dans la bande S, selon l'une quelconque des revendications 1 à 13, présentant les rayons et les indices des tranches étant déterminés de manière à ce que la fibre optique à compensation de dispersion présente, à la longueur de 1495 nm, un rapport de dispersion chromatique sur pente de dispersion chromatique dont la valeur absulue est comprise entre 80 nm et 118 nm.

15. Fibre optique à compensation de dispersion chromatique dans la bande S, selon la revendication 14, présentant les rayons et les indices de chacune des tranches étant déterminés de manière à ce que la fibre optique à compensation de dispersion présente, à la longueur de 1495 nm, un rapport dispersion chromatique sur pente de dispersion chromatique dont la valeur absolue est comprise entre 87 nm et 105 nm.

16. Fibre optique à compensation de dispersion dans la bande S selon l'une quelconques des revendications 1 à 15, présentant la valeur absolue de l'indice minimum de la première tranche enterrée étant inférieure ou égale à 90% de la valeur absolue de l'indice maximum de la tranche centrale.

**Claims**

1. Optical fibre which compensates chromatic dispersion in the S band from 1460 nm to 1530 nm, for a wavelength multiplexing transmission network, having a negative chromatic dispersion at a wavelength of 1495 nm, comprising successively, from the centre towards the periphery, a core having a variable index profile and then a cladding of constant index, the variable index profile of the core comprising successively, from the centre towards the periphery, a central portion having a maximum index greater than the index of the cladding, a first depressed portion having a minimum index less than the index of the cladding, an annular portion having a maximum index greater than the index of the cladding and less than the maximum index of the central portion, a second depressed portion having a minimum index less than the index of the cladding, the difference (Δn$_1$) between the maximum index of the central portion and the index of the cladding being between 12 x 10$^{-3}$ and 20 x 10$^{-3}$, inclusive, the radius (r$_1$) of the part of the central portion having an index greater than the index of the cladding being between 1.57 µm and 2.5 µm, inclusive, the external radius (r$_2$) of the first depressed portion, which has an index less than the index of the cladding, being between 4.0 µm and 7.4 µm, and the radii and indices of each of the portions being determined so that the optical fibre which compensates dispersion has, at a wavelength of 1495 nm, a ratio of chromatic dispersion to chromatic dispersion slope whose absolute value is between 68 nm and 158 nm, inclusive, **characterised in that** the difference (Δn$_2$) between the minimum index of the first depressed portion and the index of the cladding is between -12 x 10$^{-3}$ and -5 x 10$^{-3}$, inclusive, and **in that** the value of the integral

$$S_{01} = \int_0^{r1} \Delta n(r) \cdot dr$$

, between a zero radius and the radius (r$_1$) of the part of the central portion having an index greater than the index of the cladding, of the difference in index with respect to the cladding, is between 28.4 x 10$^{-3}$ µm and 35.5 x 10$^{-3}$ µm, inclusive.

2. Optical fibre which compensates chromatic dispersion in the S band, according to claim 1, wherein the value of twice the integral

$$\left(T_{01} = 2.\int_{0}^{r1} \Delta n(r).r.dr\right),\ \text{between a zero radius}$$

and the radius ($r_1$) of the part of the central portion having an index greater than the index of the cladding, of the product of the index with respect to the cladding and the radius, is between $49 \times 10^{-3}\ \mu m^2$ and $81 \times 10^{-3}\ \mu m^2$, inclusive.

3. Optical fibre which compensates chromatic dispersion in the S band, according to claim 1 or 2, wherein the value of the integral $\left(S_{12} = \int_{r1}^{r2} \Delta n(r).dr\right)$,

between the radius ($r_1$) of the part of the central portion having an index greater than the index of the cladding and the radius ($r_2$) of the part of the first depressed portion having an index less than the index of the cladding, of the difference in index with respect to the cladding, is between $-56 \times 10^{-3}\ \mu m$ and $-20 \times 10^{-3}\ \mu m$, inclusive.

4. Optical fibre which compensates chromatic dispersion in the S band, according to claim 1, 2 or 3, wherein the value of twice the integral

$$\left(T_{12} = 2.\int_{r1}^{r2} \Delta n(r).r.dr\right),\ \text{between the radius}$$

($r_1$) of the part of the central portion having an index greater than the index of the cladding and the radius ($r_2$) of the part of the first depressed portion having an index less than the index of the cladding, of the product of the radius and the difference in index with respect to the cladding, is between $-470 \times 10^{-3}\ \mu m^2$ and $-130 \times 10^{-3}\ \mu m^2$, inclusive.

5. Optical fibre which compensates chromatic dispersion in the S band, according to any one of claims 1 to 4, wherein the difference ($\Delta n_3$) between the index of the annular portion and the index of the cladding is between $1.0 \times 10^{-3}$ and $8.0 \times 10^{-3}$, inclusive, and the external radius ($r_3$) of the annular portion is between 6.8 $\mu m$ and 12 $\mu m$, inclusive.

6. Optical fibre which compensates chromatic dispersion in the S band, according to claim 5, wherein the value of the integral $\left(S_{23} = \int_{r2}^{r3} \Delta n(r).dr\right)$, between the radius ($r_2$) of the part of the first depressed portion having an index less than the index of the cladding and the radius ($r_3$) of the part of the annular portion having an index greater than the index of the cladding, of the difference in index with respect to the cladding, is between $5 \times 10^{-3}\ \mu m$ and $26 \times 10^{-3}\ \mu m$, inclusive.

7. Optical fibre which compensates chromatic dispersion in the S band, according to claim 5 or 6, wherein the value of twice the integral

$$\left(T_{23} = 2.\int_{r2}^{r3} \Delta n(r).r.dr\right),\ \text{between the radius}$$

($r_2$) of the part of the first depressed portion having an index less than the index of the cladding and the radius ($r_3$) of the part of the annular portion having an index greater than the index of the cladding, of the product of the radius and the difference in index with respect to the cladding, is between $60 \times 10^{-3}\ \mu m^2$ and $440 \times 10^{-3}\ \mu m^2$, inclusive.

8. Optical fibre which compensates chromatic dispersion in the S band, according to any one of claims 1 to 7, wherein the difference ($\Delta n_4$) between the minimum index of the second depressed portion and the index of the cladding is between $-12 \times 10^{-3}$ and 0, inclusive; and the external radius ($r_4$) of the second depressed portion is between 9 $\mu m$ and 21 $\mu m$, inclusive.

9. Optical fibre which compensates chromatic dispersion in the S band, according to claim 8, wherein the value of the integral $\left(S_{34} = \int_{r3}^{r4} \Delta n(r).dr\right)$, between the radius ($r_3$) of the part of the annular portion having an index greater than the index of the cladding and the radius ($r_4$) of the part of the second depressed portion having an index less than the index of the cladding, of the difference in index with respect to the cladding, is between $-153 \times 10^{-3}\ \mu m$ and 0 $\mu m$, inclusive.

10. Optical fibre which compensates chromatic dispersion in the S band, according to claim 8 or 9, wherein the value of the integral $\left(S_{04} = \int_{0}^{r4} \Delta n(r).dr\right)$,

between a zero radius and the radius ($r_4$) of the part of the second depressed portion having an index less than the index of the cladding, of the difference in index with respect to the cladding, is between $-138 \times 10^{-3}\ \mu m$ and $22 \times 10^{-3}\ \mu m$, inclusive.

11. Optical fibre which compensates chromatic dispersion in the S band, according to any one of claims 8 to 10, wherein the value of twice the integral

$$\left( T_{04} = 2.\int_{0}^{r4} \Delta n(r).r.dr \right),$$ between a zero radius

and the radius ($r_4$) of the part of the second depressed portion having an index less than the index of the cladding, of the product of the radius and the difference in index with respect to the cladding, is less than or equal to $80 \times 10^{-3}\ \mu m^2$.

12. Optical fibre which compensates chromatic dispersion in the S band, according to any one of claims 8 to 11, wherein the value of twice the integral

$$\left( U_{04} = 2.\int_{0}^{r4} \Delta n(r).\exp\left(\frac{-r^2}{b^2}\right).r.dr \right),$$

between a zero radius and the radius ($r_4$) of the part of the second depressed portion having an index less than the index of the cladding, of the product of the radius, the difference in index with respect to the cladding, and the function $\exp(-r^2/b^2)$ wherein b = 1.54 $\mu m$, is between $24 \times 10^{-3}\ \mu m^2$ and $28.3 \times 10^{-3}\ \mu m^2$, inclusive.

13. Optical fibre which compensates chromatic dispersion in the S band, according to any one of claims 8 to 12, wherein the value of twice the integral

$$\left( U_{24} = 2.\int_{r2}^{r4} \Delta n(r).\exp\left(\frac{-r^2}{c^2}\right).r.dr \right),$$

between the radius ($r_2$) of the part of the first depressed portion having an index less than the index of the cladding and the radius ($r_4$) of the part of the second depressed portion having an index less than the index of the cladding, of the product of the radius, the difference in index with respect to the cladding, and the function $\exp(-r^2/c^2)$ wherein c = 4.67 $\mu m$, is between $9.8 \times 10^{-3}\ \mu m^2$ and $42.6 \times 10^{-3}\ \mu m^2$, inclusive.

14. Optical fibre which compensates chromatic dispersion in the S band, according to any one of claims 1 to 13, wherein the radii and indices of the portions are determined so that the optical fibre which compensates dispersion has, at a wavelength of 1495 nm, a ratio of chromatic dispersion to chromatic dispersion slope whose absolute value is between 80 nm and 118 nm, inclusive.

15. Optical fibre which compensates chromatic dispersion in the S band, according to claim 14, wherein the radii and indices of each of the portions are determined so that the optical fibre which compensates dispersion has, at a wavelength of 1495 nm, a ratio of chromatic dispersion to chromatic dispersion slope whose absolute value is between 87 nm and 105 nm, inclusive.

16. Optical fibre which compensates dispersion in the S band, according to any one of claims 1 to 15, wherein the absolute value of the minimum index of the first depressed portion is less than or equal to 90 % of the absolute value of the maximum index of the central portion.

## Patentansprüche

1. Optische Faser zur Kompensation der chromatischen Dispersion im S-Band von 1460 nm bis 1530 nm,
   für ein Übertragungsnetz mit Wellenlängenmultiplexen,
   welche eine negative chromatische Dispersion bei der Wellenlänge von 1495 nm aufweist,
   welche aufeinanderfolgend vom Zentrum zum Rand einen Kern, welcher ein variables Indexprofil aufweist, gefolgt von einer Hülle mit konstantem Index enthält,
   wobei das variable Indexprofil des Kerns aufeinanderfolgend vom Zentrum zum Rand enthält:

   einen zentralen Abschnitt mit maximalem Index größer als der Index der Hülle,
   einen ersten vergrabenen Abschnitt mit minimalem Index kleiner als der Index der Hülle,
   einen ringförmigen Abschnitt mit maximalem Index größer als der Index der Hülle und kleiner als der maximale Index des zentralen Abschnitts,
   einen zweiten vergrabenen Abschnitt mit minimalem Index kleiner als der Index der Hülle,
   wobei die Differenz ($\Delta n_1$) zwischen dem maximalen Index des zentralen Abschnitts und dem Index der Hülle zwischen $12.10^{-3}$ und $20.10^{-3}$ enthalten ist,
   wobei der Radius ($r_1$) des Teils des zentralen Abschnitts, welcher einen Index größer als der Index der Hülle aufweist, zwischen 1,57 $\mu m$ und 2,5 $\mu m$ enthalten ist,
   wobei der Außenradius ($r_2$) des ersten vergrabenen Abschnitts, welcher einen Index kleiner als dem Index der Hülle aufweist, zwischen 4,0 $\mu m$ und 7,4 $\mu m$ enthalten ist, und
   wobei die Radien und die Indices jedes Abschnitts in einer Weise bestimmt sind, dass die optische Faser zur Dispersionskompensation bei der Wellenlänge von 1495 nm ein Verhältnis der chromatischen Dispersion zur Steigung der chromatischen Dispersion aufweist, dessen absoluter Wert zwischen 68 nm und 158 nm enthalten ist,
   **dadurch gekennzeichnet, dass** die Differenz ($\Delta n_2$) zwischen dem minimalen Index des ersten vergrabenen Abschnitts und dem Index der Hülle zwischen -12·10⁻³ und -5·10⁻³ enthalten ist, und

dass der Wert des Integrals

$$( S_{01} = \int_0^{r1} \Delta n(r) \cdot dr )$$ von einem Ra-dius 0 zu dem Radius ($r_1$) des Teils des zentralen Abschnitts, welcher einen Index größer als der Index der Hülle aufweist, der Indexdifferenz zur Hülle zwischen 28,4·10⁻³ $\mu$m und 35,5·10⁻³ $\mu$m enthalten ist.

2. Optische Faser zur Kompensation der chromatischen Dispersion im S-Band gemäß Anspruch 1, welches einen doppelten Wert des Integrals

$$( T_{01} = 2 \cdot \int_0^{r1} \Delta n(r) \cdot r \cdot dr )$$ von einem Radius 0

zu dem Radius ($r_1$) des Teils des zentralen Abschnitts, welcher einen Index größer als der Index der Hülle aufweist, des Produkts des Index bezüglich der Hülle mit dem Radius zwischen 49·10⁻³ $\mu$m² und 81·10⁻³ $\mu$m² aufweist, der enthalten ist.

3. Optische Faser zur Kompensation der chromatischen Dispersion im S-Band gemäß Anspruch 1 oder 2, welche einen Wert des Intergrals

$$( S_{12} = 2 \cdot \int_{r1}^{r2} \Delta n(r) \cdot dr )$$ von dem Radius ($r_1$)

des Teils des zentralen Abschnitts, welcher einen Index größer als dem Index der Hülle aufweist, zu dem Radius ($r_2$) des Teils des vergrabenen Abschnitts, welcher einen Index kleiner als der Index der Hülle aufweist, der Indexdifferenz zu der Hülle aufweist, der zwischen -56·10⁻³ $\mu$m und -20·10⁻³ $\mu$m enthalten ist.

4. Optische Faser zur Kompensation der chromatischen Dispersion im S-Band gemäß Anspruch 1, 2 oder 3, welche einen doppelte Wert des Integrals

$$( T_{12} = 2 \cdot \int_{r1}^{r2} \Delta n(r) \cdot r \cdot dr )$$ von dem Radius ($r_1$)

des Teils des zentralen Abschnitts, welcher einen Index größer als der Index der Hülle aufweist, zu dem Radius ($r_2$) des Teils des ersten vergrabenen Abschnitts, welcher einen Index kleiner als der Index der Hülle aufweist, des Produkts des Radius mit der Indexdifferenz zu der Hülle aufweist, der zwischen -470·10⁻³ $\mu$m² und -130·10⁻³ $\mu$m² enthalten ist.

5. Optische Faser zur Kompensation der chromatischen Dispersion im S-Band gemäß einem der Ansprüche 1 bis 4, welche die Differenz ($\Delta n_3$) zwischen dem Index des ringförmigen Abschnitts und dem Index der Hülle aufweist, welche zwischen 1,0·10⁻³ und 8,0·10⁻³ enthalten ist, wobei der Außenradius ($r_3$) des ringförmigen Abschnitts zwischen 6,8 $\mu$m und 12 $\mu$m enthalten ist.

6. Optische Faser zur Kompensation der chromatischen Dispersion im S-Band gemäß Anspruch 5, welche den Wert des Integrals

$$( S_{23} = \int_{r2}^{r3} \Delta n(r) \cdot dr )$$ von dem Radius ($r_2$) des

Teils des ersten vergrabenen Abschnitts, welcher einen Index kleiner als der Index der Hülle aufweist, zu dem Radius ($r_3$) des Teils des ringförmigen Abschnitts, welcher einen Index größer als der Index der Hülle aufweist, der Indexdifferenz bezüglich der Hülle aufweist, der zwischen 5·10⁻³ $\mu$m und 26·10⁻³ $\mu$m enthalten ist.

7. Optische Faser zur Kompensation der chromatischen Dispersion im S-Band gemäß Anspruch 5 oder 6, welche einen doppelten Wert des Integrals

$$( T_{23} = 2 \cdot \int_{r2}^{r3} \Delta n(r) \cdot r \cdot dr )$$ von dem Radius ($r_2$)

des Teils des ersten vergrabenen Abschnitts, welcher einen Index kleiner als der Index der Hülle aufweist, zu dem Radius ($r_3$) des Teils des ringförmigen Abschnitts, welcher einen Index größer als der Index der Hülle aufweist, des Produkts des Radius mit der Indexdifferenz zur Hülle aufweist, der zwischen 60·10⁻³ $\mu$m² und 440·10⁻³ $\mu$m² enthalten ist.

8. Optische Faser zur Kompensation der chromatischen Dispersion im S-Band gemäß einem der Ansprüche 1 bis 7, wobei die Differenz ($\Delta n_4$) zwischen dem minimalen Index des zweiten vergrabenen Abschnitts und dem Index der Hülle zwischen -12·10⁻³ und 0 enthalten ist, und der Außenradius ($r_4$) des zweiten vergrabenen Abschnitts zwischen 9 $\mu$m und 21 $\mu$m enthalten ist.

9. Optische Faser zur Kompensation der chromatischen Dispersion im S-Band gemäß Anspruch 8, welche einen Wert des Intergrals

$$( S_{34} = \int_{r3}^{r4} \Delta n(r) \cdot dr )$$ von dem Radius ($r_3$) des

Teils des ringförmigen Abschnitts, welcher einen Index größer als der Index der Hülle aufweist, zu dem Radius ($r_4$) des Teils des zweiten vergrabenen Abschnitts, welcher einen Index kleiner als der Index der Hülle aufweist, der Indexdifferenz zu der Hülle aufweist, der zwischen $-153 \cdot 10^{-3}$ $\mu$m und 0 $\mu$m enthalten ist.

10. Optische Faser zur Kompensation der chromatischen Dispersion im S-Band gemäß Anspruch 8 oder 9, welche einen Wert des Integrals

$$( S_{04} = \int_0^{r4} \Delta n(r) \cdot dr )$$ von einem Radius 0 zu

dem Radius ($r_4$) des Teils des zweiten vergrabenen Abschnitts, welcher einen Index kleiner als der Index der Hülle aufweist, der Indexdifferenz zu der Hülle aufweist, der zwischen $-138 \cdot 10^{-3}$ $\mu$m und $22 \cdot 10^{-3}$ $\mu$m, enthalten ist.

11. Optische Faser zur Kompensation der chromatischen Dispersion im S-Band gemäß einem der Ansprüche 8 bis 10, welche einen doppelten Wert des

Integrals $( T_{04} = 2 \cdot \int_0^{r4} \Delta n(r) \cdot r \cdot dr )$ von einem

Radius 0 zu dem Radius ($r_1$) des Teils des zweiten vergrabenen Abschnitts, welcher einen Index kleiner als der Index der Hülle aufweist, des Produkts des Radius mit der Indexdifferenz zu der Hülle aufweist, der kleiner oder gleich $80 \cdot 10^{-3}$ $\mu$m$^2$ ist.

12. Optische Faser zur Kompensation der chromatischen Dispersion im S-Band gemäß einem der Ansprüche 8 bis 11, welche einen doppelten Wert des Integrals

$$( U_{04} = 2 \cdot \int_0^{r4} \Delta n(r) \cdot \exp\left( \frac{-r^2}{b^2} \right) \cdot r \cdot dr )$$ von

einem Radius 0 zu dem Radius ($r_1$) des Teils des zweiten vergrabenen Abschnitts, welcher einen Index kleiner als der Index der Hülle aufweist, des Produkts des Radius mit der Indexdifferenz zu der Hülle und mit der Funktion exp(-r$^2$/b$^2$), mit b = 1,54 $\mu$m aufweist, der zwischen $24 \cdot 10^{-3}$ $\mu$m$^2$ und $28,3 \cdot 10^{-3}$ $\mu$m$^2$ enthalten ist.

13. Optische Faser zur Kompensation der chromatischen Dispersion im S-Band gemäß einem der Ansprüche 8 bis 12, welche einen doppelten Wert des Integrals

$$( U_{24} = 2 \cdot \int_{r2}^{r4} \Delta n(r) \cdot \exp\left( \frac{-r^2}{c^2} \right) \cdot r \cdot dr )$$ von

dem Radius (r2) des Teils des ersten vergrabenen Abschnitts, welcher einen Index kleiner als der Index der Hülle aufweist, zu dem Radius ($r_4$) des Teils des

zweiten vergrabenen Abschnitts, welcher einen Index kleiner als der Index der Hülle aufweist, des Produkts des Radius mit der Indexdifferenz zu der Hülle und mit der Funktion exp(-r$^2$/c$^2$) mit c = 4, 67 $\mu$m aufweist, der zwischen $9,8 \cdot 10^{-3}$ $\mu$m$^2$ und $42,6 \cdot 10^{-3}$ $\mu$m$^2$ enthalten ist.

14. Optische Faser zur Kompensation der chromatischen Dispersion im S-Band gemäß einem der. Ansprüche 1 bis 13, wobei die Radien und die Indices der Abschnitte in einer Meise bestimmt sind, dass die optische Faser zur Dispersionskompensation bei der Wellenlänge von 1495 nm ein Verhältnis der chromatischen Dispersion zur Steigung der chromatischen Dispersion aufweist, deren Absolutwert zwischen 80 nm und 118 nm enthalten ist.

15. Optische Faser zur Kompensation der chromatischen Dispersion im S-Band gemäß Anspruch 14, wobei die Radien und die Indices der Abschnitte in einer Weise bestimmt sind, dass die optische Faser zur Dispersionskompensation bei der Wellenlänge von 1495 nm ein Verhältnis der chromatischen Dispersion zur Steigung der chromatischen Dispersion aufweist, deren Absolutwert zwischen 87 nm und 105 nm enthalten ist.

16. Optische Faser zur Kompensation der Dispersion im S-Band gemäß einem der Ansprüche 1 bis 15, wobei der Absolutwert des minimalen Index des ersten vergrabenen Abschnitts kleiner oder gleich 90 % des Absolutwertes des maximalen Index des zentralen Abschnitts ist.

# FIG_1

Δn1   r1

Δn3

Δn2   r2

Δn4   Δn2   r3

r4

r(um)

## FIG 2

| N° | $r_1$ (µm) | $r_2$ (µm) | $r_3$ (µm) | $r_4$ (µm) | $10^3\Delta n_1$ | $10^3\Delta n_2$ | $10^3\Delta n_3$ | $10^3\Delta n_4$ |
|----|----|----|----|----|----|----|----|----|
| 10 | 2,11 | 6,61 | 9,78 | 12,43 | 14,11 | -7,00 | 7,00 | -7,00 |
| 11 | 2,01 | 5,62 | 9,56 | 11,14 | 15,19 | -8,00 | 4,59 | -4,44 |
| 12 | 2,25 | 5,37 | 9,31 | 18,61 | 13,91 | -10,00 | 3,74 | -2,19 |
| 13 | 2,08 | 5,37 | 9,5 | 17,23 | 15,2 | -10,00 | 4,26 | -3,66 |
| 14 | 2 | 5,31 | 8,06 | 10,29 | 15,91 | -10,00 | 5,57 | -0,56 |
| 15 | 2,14 | 5,24 | 7,66 | 10,47 | 15,16 | -12,00 | 5,67 | -1,74 |
| 16 | 2,03 | 5,05 | 8,92 | 17,83 | 16,18 | -12,00 | 4,14 | -2,55 |
| 17 | 1,89 | 4,97 | 9,34 | 15,28 | 17,66 | -12,00 | 4,17 | -5,12 |

## FIG 3

| N° | $S_{\text{eff}}$ µm² @1495nm | C ps/nm.km @1495nm | C' ps/nm².km @1495nm | C/C' nm @1495nm | Taux de compensation TeraLight Ultra (%) | Taux de compensation TeraLight (%) | $\lambda_{\text{zdλ}}$ µm | $PC_{1530}$ dB/m |
|----|----|----|----|----|----|----|----|----|
| 10 | 20 | -19,6 | -0,171 | 115 | 116 | 139 | 1,73 | 1,6 |
| 11 | 19 | -28,8 | -0,244 | 118 | 119 | 142 | 1,72 | 3,6 |
| 12 | 19 | -9,2 | -0,091 | 102 | 103 | 123 | 1,51 | 0,1 |
| 13 | 18 | -19,1 | -0,173 | 111 | 112 | 134 | 1,60 | 0,2 |
| 14 | 17 | -29,1 | -0,271 | 108 | 109 | 130 | 1,72 | 2,7 |
| 15 | 17 | -10,1 | -0,099 | 102 | 103 | 123 | 1,50 | 0,6 |
| 16 | 16 | -18,9 | -0,18 | 105 | 106 | 127 | 1,53 | 0,1 |
| 17 | 15 | -29,1 | -0,269 | 108 | 109 | 130 | 1,56 | 0,2 |

## FIG. 4

| N° | $S_{01}$ $(10^{-3}\mu m)$ | $T_{01}$ $(10^{-3}\mu m^2)$ | $S_{12}$ $(10^{-3}\mu m)$ | $T_{12}$ $(10^{-3}\mu m^2)$ | $S_{23}$ $(10^{-3}\mu m)$ | $T_{23}$ $(10^{-3}\mu m^2)$ | $S_{34}$ $(10^{-3}\mu m)$ | $S_{04}$ $(10^{-3}\mu m)$ | $T_{04}$ $(10^{-3}\mu m^2)$ | $U_{04}$ $(10^{-3}\mu m^2)$ | $U_{24}$ $(10^{-3}\mu m^2)$ |
|----|----|----|----|----|----|----|----|----|----|----|----|
| MIN | 28,4 | 49 | -56 | -470 | 5 | 60 | -153 | -138 |  | 24,1 | 9,8 |
| MAX | 35,5 | 81 | -20 | -130 | 26 | 440 | 0 | 22 | 80 | 28,3 | 42,6 |
| 10 | 29,8 | 62,8 | -31,5 | -274,7 | 22,2 | 363,7 | -18,6 | -38,8 | -260,2 | 25,8 | 16,9 |
| 11 | 30,5 | 61,4 | -28,9 | -220,4 | 18,1 | 274,5 | -7,0 | -12,4 | -29,7 | 26,0 | 20,9 |
| 12 | 31,3 | 70,4 | -31,2 | -237,7 | 14,7 | 216,3 | -20,4 | -40,6 | -519,7 | 26,3 | 19,3 |
| 13 | 31,6 | 65,8 | -32,9 | -245,1 | 17,6 | 261,6 | -28,3 | -57,9 | -674,0 | 26,4 | 22,0 |
| 14 | 31,8 | 63,6 | -33,1 | -242,0 | 15,3 | 204,8 | -1,2 | -3,8 | 3,6 | 26,4 | 26,6 |
| 15 | 32,4 | 69,4 | -37,2 | -274,5 | 13,7 | 177,0 | -4,9 | -14,5 | -116,7 | 26,6 | 24,4 |
| 16 | 32,8 | 66,7 | -36,2 | -256,6 | 16,0 | 223,8 | -22,7 | -48,8 | -573,9 | 26,6 | 24,2 |
| 17 | 33,4 | 63,1 | -37,0 | -253,5 | 18,2 | 260,8 | -30,4 | -64,4 | -678,5 | 26,3 | 25,6 |

**EP 1 434 071 B1**

## RÉFÉRENCES CITÉES DANS LA DESCRIPTION

**Documents brevets cités dans la description**

- EP 1219986 A
- WO 0219576 A